# EUROPÄISCHE PATENTANMELDUNG

(11) **EP 3 231 686 A1**
(43) Veröffentlichungstag der Anmeldung: **18.10.2017**
(21) Anmeldenummer: 16165267.2
(22) Anmeldetag: 14.04.2016
(51) Int. Cl.: B62B 5/00

(54) **TRANSPORTHILFE**

(71) Anmelder: Salzmann, Hans-Georg, 77933 Lahr (DE)
(72) Erfinder: Salzmann, Hans-Georg, 77933 Lahr (DE)
(74) Vertreter: Limbeck, Achim

(57) **Zusammenfassung**

Die vorliegende Erfindung betrifft eine neuartige Transporthilfe (1), die ein im Wesentlichen flächig ausgeformtes und horizontal ausgerichtetes Auflageprofil (10) zur Auflage von Lasten und mehrere unterhalb des Auflageprofils (10) beabstandet angeordnete Räder (11) umfasst. Erfindungsgemäß ist die Transporthilfe dadurch gekennzeichnet, dass das Auflage-profil (10) aus mindestens zwei Profilteilen (100,101) gebildet ist, welche mittels eines die Profilteile (100,101) verbindenden Führungselements (12) verschieblich auseinander ziehbar sind. Ganz besonders bevorzugt umfasst das Führungselement (12) mindestens ein axial verschieblich gelagertes Führungsprofil (120).

## Beschreibung

### Technisches Gebiet

Die vorliegende Erfindung betrifft eine Transporthilfe, umfassend ein im Wesentlichen flächig ausgeformtes und horizontal ausgerichtetes Auflageprofil zur Auflage und zum Transport von Lasten (wie bspw. Möbel, Bauteile, Werkstoffe oder andere Objekte) sowie mehrere unterhalb des Auflageprofils beabstandet angeordnete Räder.

### Stand der Technik

Aus dem Stand der Technik sind bereits derartige Transporthilfen bspw. in Form von fahrbaren Möbelrollern als Transportmittel bekannt und werden vornehmlich im Gewerbe sowie im Handwerk aber darüber hinaus auch für den häuslichen Gebrauch eingesetzt. Bekannte Transporthilfen sind in verschiedenen Ausführungsformen und Größen bekannt, aber konstruktionsbedingt jeweils auf eine bestimmte Größe beweglicher Lasten beschränkt.

Bekannte Auflageprofile der Transporthilfen sind einteilig ausgeführt und bestehen in der Regel aus Sperrholz, MDF-Platten, Fahrzeugbauplatten, OSB-Platten, Kunststoff oder Metall. Bedingt durch diese Ausgestaltung sind solche Transporthilfen, welche für größere Objekte ausgelegt sind, sperrig und weisen ein größeres Gewicht auf.

Einfache und in ihrer Konstruktion kostengünstige Transporthilfen, die sich in der Länge und/oder Breite stufenlos verändern und arretieren lassen, sind hingegen nicht bekannt. Andere am Markt befindliche Lösungen zum Transport von Lasten sind kostenaufwendig konstruiert bei deutlichen Tragkraftverlusten und bei sehr aufwendigen Mechaniken.

### Darstellung der Erfindung

Der vorliegenden Erfindung liegt daher die Aufgabe zu Grunde, eine Transporthilfe zu schaffen, welche die vorgenannten Probleme ausräumt und welche sich mittels in technischer Hinsicht einfach ausgestalteter mechanischer Bauteile in ihrer Länge und/oder Breite - vorzugsweise stufenlos - teleskopieren lässt, so dass sie zum Transport sowohl für kleinere als auch für größere Objekte / Lasten einsetzbar ist.

Erfindungsgemäß wird die voranstehende Aufgabe gemäß dem Oberbegriff des Anspruchs 1 in Verbindung mit den kennzeichnenden Merkmalen gelöst. Vorteilhafte Ausgestaltungen und Weiterbildungen der erfindungsgemäßen Transporthilfe sind in den abhängigen Unteransprüchen angegeben.

Erfindungsgemäß ist eine Transporthilfe der eingangs genannten Art dadurch gekennzeichnet, dass das Auflageprofil aus mindestens zwei Profilteilen gebildet ist, welche mittels eines die Profilteile verbindenden Führungselements verschieblich auseinander ziehbar sind.

Die mindestens zwei (flächigen) Profilteile sind vorteilhaft so ausgeformt, dass deren Ränder/Kanten in eingezogener Position der Profilteile möglichst passgenau aneinander liegen.

Das Führungselement umfasst vorzugsweise mindestens ein axial verschieblich gelagertes Führungsprofil, welches die mindestens zwei Profilteile miteinander verschieblich verbindet, wobei das Führungsprofil vorzugsweise an einem Profilteil irreversibel und an dem anderen Profilteil reversibel und verschieblich angeordnet ist. Zudem umfasst das Führungselement mindestens eine Gleitfläche, ein Lager und/oder eine Rollenvorrichtung, auf bzw. an der das mindestens eine Führungsprofil verschieblich gelagert ist.

Das Führungselement ist vorteilhafterweise auf der Unterseite der mindestens zwei Profilteile angeordnet und dort mittels geeigneter Verbindungsmittel reversibel und/oder irreversibel befestigt.

Die Arretierung des Führungselements kann hierbei vorzugsweise durch mindestens eine Schraubverbindung erfolgen. Das Führungselement kann darüber hinaus je nach Anforderung und Design in die Profilteile eingelassen und/oder verschraubt werden.

Der Vorteil der erfindungsgemäßen Transporthilfe ist in erster Linie in seiner konstruktiv einfachen Ausgestaltung zu sehen. Die Erfindung lässt Transporthilfen in Größe und Gewichtsanforderung teleskopierbar und arretierbar anpassen. Durch die simple Anordnung des Führungselements ist eine einfache Handhabung und Montage gewährleistet. Die Verstellung ist stufenlos und es entsteht je nach Ausführung kein Tragkraftverlust. Die Herstellung und Montage ist sehr preiswert und die Erfindung lässt sich jederzeit bei den vorhandenen Modellen nachrüsten.

### Kurzbeschreibung der Zeichnungen

Weitere Ziele, Merkmale, Vorteile und Anwendungsmöglichkeiten der erfindungsgemäßen Transporthilfe ergeben sich aus der nachfolgenden Beschreibung eines Ausführungsbeispiels anhand der Zeichnungen. Dabei bilden alle beschriebenen und/oder bildlich dargestellten Merkmale für sich oder in beliebiger Kombination den Gegenstand der Erfindung, unabhängig von der Zusammenfassung in einzelnen Ansprüchen oder deren Rückbeziehung.

### In den Zeichnungen zeigen

Fig.1 die erfindungsgemäße Transporthilfe in einer vorteilhaften, auseinander gezogenen und perspektivischen Ansicht von seitlich oben;
Fig.2 die Transporthilfe wie in Fig.1 von schräg unten;
Fig.3 die Transporthilfe in zusammengeführter Position in perspektivischer Draufsicht.

### Ausführung der Erfindung

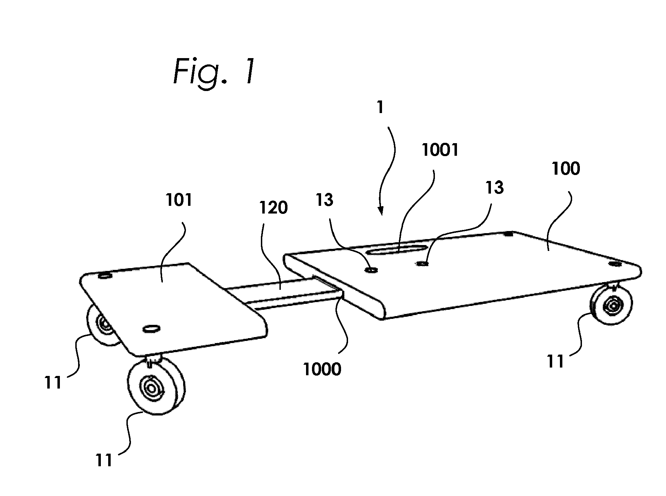

Wie aus Fig.1 ersichtlich, umfasst die erfindungsgemäße Transporthilfe 1 ein im Wesentlichen flächig ausgeformtes und horizontal ausgerichtetes Auflageprofil 10 mit vorzugsweise jeweils zwei an den beiden Profilteilen 100,101 beabstandet angeordneten Rädern 11.

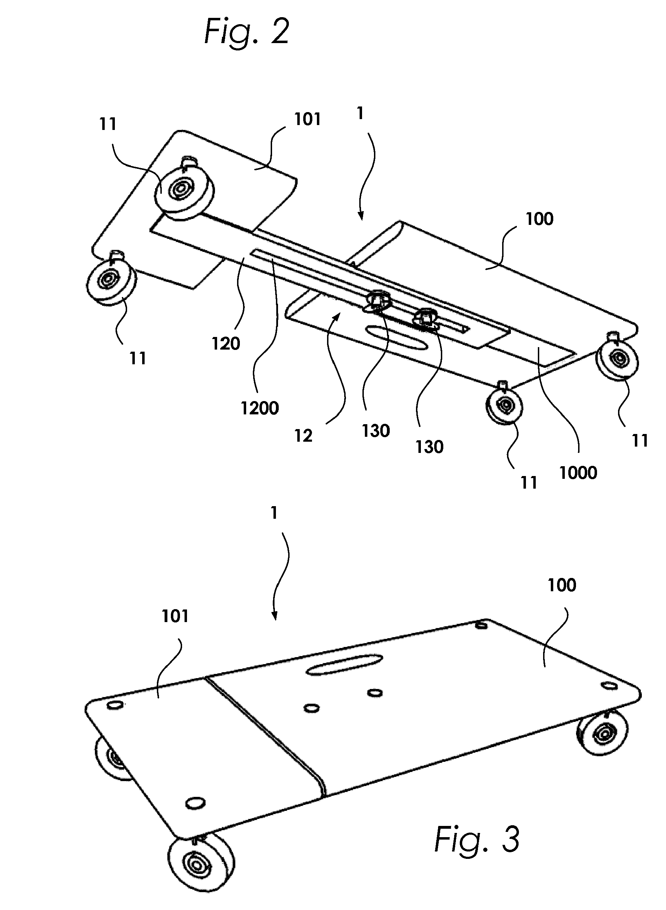

Das Führungselement 12 umfasst in dieser bevorzugten Ausführungsform in der in Fig.2 dargestellten Ausführungsform ein axial verschieblich gelagertes Führungsprofil 120 und eine Gleitfläche, an der das mindestens eine Führungsprofil 120 verschieblich gelagert ist. Die Gleitfläche ist aus einer an dem Profilteil 100 vorgesehenen Führungsnut 1000 gebildet, in der das Führungsprofil 120 verschieblich gelagert ist.

Das Führungsprofil 120 ist dabei an dem Profilteil 101 vorzugsweise irreversibel, also fix, und an dem Profilteil 100 verschieblich angeordnet.

Diese bevorzugte Ausgestaltung der Verbindung mit einer fixen Fixierung und einer innerhalb der Führungsnut 1000 angeordneten Führung des Führungsprofils 120 gewährleistet eine sehr hohe Stabilität dieser Konstruktion der erfindungsgemäßen Transporthilfe 1.

Das Führungsprofil 120 umfasst darüber hinaus eine axial ausgerichtete Ausnehmung 1200 zur Durchführung mindestens eines reversiblen Fixierungsmittels 13 zur Fixierung des Führungsprofils 120 an dem mindestens einen Profilteil 100, wobei in dieser Ausführung zwei Fixierungsmittel 13 vorgehen sind, die aus Schraubverbindungen gebildet sind, welche mit einer Flügelmutter 130 gesichert werden.

Das Führungsprofil 120 ist in einer besonders vorteilhaften Ausführungsform (nicht dargestellt) aus einem U-Profil aus Metall gebildet.

Dieses als U-Profil ausgebildete Führungsprofil 120 kann konstruktionsbedingt bei herkömmlichen Transporthilfen problemlos nachgerüstet werden. Hierzu sind an mindestens einem Profilteil 100 bestehender Transporthilfen anzuordnende und für die Aufnahme der Fixierungsmittel 13 ausgestaltete Öffnungen vorzusehen und das Führungsprofil 120 an dem anderen Profilteile 101 bspw. mittels geeigneter Schraubverbindungen zu fixieren.

Es versteht sich von selbst, dass die Transporthilfe 1 in einer weiteren denkbaren Ausführungsform der Erfindung nicht nur in ihrer Länge, sondern auch zusätzlich oder alternativ in ihrer Breite veränderbar sein kann. Hierzu sind entsprechend der vorliegenden Erfindung zusätzlich ein oder mehrere Führungsmittel 12 in Querrichtung der Transporthilfe an der Transporthilfe 1 anzuordnen.

Die erfindungsgemäße Transporthilfe 1 und dessen unterschiedliche Bauteile 10,12,13,100,101,120 können aus Sperrholz, MDF-Platten, Fahrzeugbauplatten, OSB-Platten, Kunststoff, Metall oder jeglichem anderen geeigneten Material gefertigt sein.

Die erfindungsgemäße Transporthilfe 1 beschränkt sich in ihrer Ausführung nicht auf die vorstehend angegebenen bevorzugten Ausführungsformen. Vielmehr sind eine Vielzahl von Ausgestaltungsvariationen denkbar, welche von der dargestellten Lösung auch bei grundsätzlich anders gearteter Ausführung Gebrauch machen.

### Liste der Bezugsziffern

- 1: Transporthilfe
- 10: Auflageprofil
- 11: drehbar gelagerte Räder
- 12: Führungselement
- 13: Fixierungsmittel
- 100,101: Profilteile
- 120: Führungsprofil
- 130: Flügelmuttern
- 1000: Führungsnut
- 1001: Ausnehmung / Handgriff
- 1200: Ausnehmung

## Patentansprüche

1. Transporthilfe (1), umfassend ein im Wesentlichen flächig ausgeformtes und horizontal ausgerichtetes Auflageprofil (10) zur Auflage von Lasten und mehrere unterhalb des Auflageprofils (10) beabstandet angeordnete Räder (11),
**dadurch gekennzeichnet, dass**
das Auflageprofil (10) aus mindestens zwei Profilteilen (100,101) gebildet ist, welche mittels eines die Profilteile (100,101) verbindenden Führungselements (12) verschieblich auseinander ziehbar sind.

2. Transporthilfe (1) nach Anspruch 1,
**dadurch gekennzeichnet, dass**
das Führungselement (12) mindestens ein axial verschieblich gelagertes Führungsprofil (120) umfasst.

3. Transporthilfe (1) nach Anspruch 2,
**dadurch gekennzeichnet, dass**
das Führungselement (12) mindestens eine Gleitfläche, ein Lager und/oder eine Rollenvorrichtung umfasst, auf der das mindestens eine Führungsprofil (120) verschieblich gelagert ist.

4. Transporthilfe (1) nach Anspruch 2,
**dadurch gekennzeichnet, dass**
die Gleitfläche aus einer an mindestens einem Profilteil (100) vorgesehenen Führungsnut (1000) gebildet ist, in der das Führungsprofil (120) verschieblich gelagert ist.

5. Transporthilfe (1) nach den Ansprüchen 2 und 3,
**dadurch gekennzeichnet, dass**
das Führungsprofil (120) zumindest eine axial ausgerichtete Ausnehmung (1200) zur Durchführung mindestens eines reversiblen Fixierungsmittels (13) zur Fixierung des Führungsprofils (120) an dem mindestens einen Profilteil (100) umfasst.

6. Transporthilfe (1) nach Anspruch 5,
**dadurch gekennzeichnet, dass**
das mindestens eine Fixierungsmittel (13) eine Schraubverbindung ist.

7. Transporthilfe (1) nach einem der vorangegangenen Ansprüche 2 bis 6,
**dadurch gekennzeichnet, dass**
das Führungsprofil (120) an einem Profilteil (101) irreversibel angeordnet ist.

8. Transporthilfe (1) Transporthilfe (1) nach einem der vorangegangenen Ansprüche 2 bis 7,
**dadurch gekennzeichnet, dass**
das Führungsprofil (120) als U-Profil ausgebildet ist.

9. Transporthilfe (1) Transporthilfe (1) nach einem der vorangegangenen Ansprüche 1 bis 8,
**dadurch gekennzeichnet, dass**
die Transporthilfe (1) in ihrer Länge und/oder Breite veränderbar ist.

## Geänderte Patentansprüche

### Geänderte Patentansprüche gemäss Regel 137(2) EPÜ.

1. Transporthilfe (1), umfassend ein im Wesentlichen flächig ausgeformtes und horizontal ausgerichtetes Auflageprofil (10) zur Auflage von Lasten und mehrere unterhalb des Auflageprofils (10) beabstandet angeordnete Räder (11), wobei das Auflageprofil (10) aus mindestens zwei Profilteilen (100,101) gebildet ist, welche mittels eines die Profilteile (100,101) verbindenden Führungselements (12) verschieblich auseinander ziehbar sind und das Führungselement (12) mindestens ein axial verschieblich gelagertes Führungsprofil (120) sowie mindestens eine Gleitfläche unmfasst, auf der das mindestens eine Führungsprofil (120) verschieblich gelagert ist, **dadurch gekennzeichnet, dass**
das Führungsprofil (120) zumindest eine axial ausgerichtete Ausnehmung (1200) zur Durchführung mindestens eines reversiblen Fixierungsmittels (13) zur Fixierung des Führungsprofils (120) an dem mindestens einen Profiteil (100) umfasst, wobei das Führungsprofil (120) an dem Profilteil (101) irreversibel angeordnet ist.

2. Transporthilfe (1) nach Aspruch 1,
**dadurch gekennzeichnet, dass**
die Gleitfläche aus einer an mindestens einem Profilteil (100) vorgesehenen Führungsnut (1000) gebildet ist, in der das Führungsprofil (120) verschieblich gelagert ist.

3. Transporthilfe (1) nach den Ansprüchen 1 oder 2,
**dadurch gekennzeichnet, dass**

4. Transporthilfe (1) nach einem der vorangegangenen Ansprüche
**dadurch gekennzeichnet, dass**
das mindestens eine Fixierungsmittel (13) eine Schraubverbindung ist.

5. Transporthilfe (1) nach Anspruch 1 oder 2,
**dadurch gekennzeichnet, dass**
das Führungsprofil (120) als U-Profil aus Metall ausgebildet ist.

6. Transporthilfe (1) nach einem der vorangegangenen Ansprüche,
**dadurch gekennzeichnet, dass**
die Grundplatten (100,101) in Längsrichtung der Transporthilfe (1) unterschiedliche Längen aufweisen.
